# EUROPEAN PATENT SPECIFICATION

(11) **EP 1 853 662 B1**
(45) Date of publication and mention of the grant of the patent: **22.12.2010**
(21) Application number: 06708479.8
(22) Date of filing: 23.02.2006
(51) Int. Cl.: C08L 23/04, C08F 297/08

(54) **POLYETHYLENE MOLDING COMPOSITION FOR PRODUCING BLOWN FILMS HAVING IMPROVED MECHANICAL PROPERTIES AND PROCESSABILITY**
POLYETHYLENFORMMASSE ZUR HERSTELLUNG VON BLASFOLIEN MIT VERBESSERTEN MECHANISCHEN EIGENSCHAFTEN UND VERBESSERTER VERARBEITBARKEIT
COMPOSITION DE POLYETHYLENE A MOULER POUR PRODUIRE DES FILMS SOUFFLES AYANT DE MEILLEURES PROPRIETES MECANIQUES ET UNE MEILLEURE APTITUDE AU TRAITEMENT

(30) Priority: 01.03.2005 DE 102005009895
(43) Date of publication of application: 14.11.2007
(73) Proprietor: Basell Polyolefine GmbH, 50389 Wesseling (DE)
(72) Inventor: BERTHOLD, Joachim, 83224 Grassau (DE); HEINICKE, Lutz-Gerd, 65760 Eschborn (DE); MEIER, Gerhardus, 60320 Frankfurt am Main (DE)
(74) Representative: Reiss, Gilles François
(86) International application number: PCT/EP2006/060224
(87) International publication number: WO 2006/092379

(56) References cited:
- EP-A- 0 129 312
- WO-A-01/23446
- WO-A-2004/058876

## Description

### Field of the invention

The present invention relates to a polyethylene (PE) molding composition for blown films having a multimodal molar mass distribution, i.e. a molding composition comprising a plurality of ethylene polymer fractions having distinct molar masses.

In the present description and in the following claims, unless otherwise indicated, the term "polymer" is used to indicate both a homopolymer, i.e. a polymer comprising repeating monomeric units derived from equal species of monomers, and a copolymer, i.e. a polymer comprising repeating monomeric units derived from at least two different species of monomers, in which case reference will be made to a binary copolymer, to a terpolymer, etc. depending on the number of different species of monomers used. The multimodal PE molding composition of the invention is particularly useful for producing blown films. The invention also relates to a process for preparing this PE molding composition.

The invention further relates to a blown film produced from the above-mentioned molding composition by a blown film process.

### Prior art

Polyethylene is used on a large scale for producing films by a blown film extrusion process thanks to the mechanical strength, processability, good chemical resistance and low intrinsic weight of polyethylene. So, for example, EP-A-0 603 935 describes a molding composition based on polyethylene which has a bimodal molar mass distribution and is suitable for producing films and moldings having good mechanical properties.

However, the prior art films made of bimodal polyethylene are not simultaneously sufficiently processable, in particular in terms of bubble stability during processing, and provided with sufficient mechanical properties. Attempts to attain an improved bubble stability inevitably resulted in an unacceptable worsening of the mechanical properties, particularly in terms of Dart Drop Impact strength (DDI), which is determined in accordance with ASTM D 1709, method A, while attempts to attain improved mechanical properties inevitably resulted in an unacceptable worsening of the bubble stability.

### Summary of the invention

The technical problem underlying the present invention is therefore that of providing a novel PE molding composition having an improved balance between processability in the blown film extrusion process, particularly in terms of film bubble stability, and the mechanical strength, particularly in terms of DDI, which properties are normally conflicting with each other. More in particular, the mechanical strength of films produced from the novel PE molding composition of the invention, expressed as DDI, should not be lower than 400 g for a film having a thickness of 20 µm.

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

The above-mentioned technical problem is solved by a PE molding composition having a multimodal molar mass distribution, a density at a temperature of 23°C in the range from 0.948 to 0.953 g/cm³ and a MFR_{190/5} of the final product after extrusion in the range from 0.10 to 0.50 dg/min.

In the present description and in the following claims, the melt flow rate MFR_{190/5} is the melt flow rate measured in accordance with ISO 1133 at 190°C and under a load of 5 kg.

Advantageously, the films produced from the novel PE molding composition of the invention have a better bubble stability, a reduced melt pressure and adequate mechanical properties when compared to the prior art films, in the sense that the DDI is above 400 g for a film having a thickness of 20 µm.

The polyethylene molding composition of the invention has a density at a temperature of 23°C in the range from 0.948 to 0.953 g/cm³, preferably from 0.948 to 0.952 g/cm³, and preferably a broad trimodal molar mass distribution.

According to the invention, the polyethylene molding composition comprises:
- from 42 to 52% by weight of the first ethylene polymer fraction made of an ethylene homopolymer A having a first molecular weight,
- from 27 to 38% by weight of the second ethylene polymer fraction made of a further homopolymer or first copolymer 8, said homopolymer of first copolymer B having a second molecular weight higher than said first molecular weight,
   and
- from 15 to 25% by weight of a third ethylene polymer fraction, i.e. of a second copolymer C, said second copolymer C having a third molecular weight higher than said second molecular weight, all percentages being based on the total weight of the molding composition.

The second copolymer B contains, in addition to ethylene, predetermined proportions, preferably from 0.1 to 2.0% by weight based on the weight of the second copolymer B, of at least one first olefin comonomer having from 4 to 8 carbon atoms.

Examples of such comonomer(s) are 1-butene, 1-pentene, 1-hexene, 1-octene and 4-methyl-1-pentene and mixture thereof.

In an analogous manner, the second copolymer C is a copolymer of ethylene and of at least one second comonomer preferably selected from the group of olefins having from 4 to 8 carbon atoms, more preferably from the above-mentioned list of comonomers.

The at least one second comonomer is present in an amount of from 3 to 15% by weight, based on the weight of the second copolymer C.

Furthermore, the PE molding composition of the invention has a melt flow rate MFR_{190/5} of the final product after extrusion in accordance with ISO 1133, in the range from 0.10 to 0.50 g/10 min, preferably from 0.19 to 0.25 g/10 min.

Preferably, the PE molding composition of the invention has a viscosity number VN₃, measured in accordance with ISO/R 1191 in decalin at a temperature of 135°C, in the range from 270 to 450 cm³/g, in particular from 350 to 430 cm³/g.

If, as provided by a preferred embodiment of the invention described more in detail in the following, the PE molding composition is prepared by means of a cascaded polymerization process comprising at least three successive polymerization stages comprising a first stage, a second stage and a third stage, the trimodality of the composition of the invention can be described in terms of viscosity numbers VN, measured in accordance with ISO/R 1191, of the ethylene polymer fractions formed in the different subsequent polymerization stages.

Here, the different viscosity numbers will be indicated as explained in the following.

The viscosity number VN₁ shall be used to indicate the viscosity number measured on the polymer after the first polymerization stage. The viscosity number VN₁ is identical to the viscosity number VN_{A} of the homopolymer A.

According to a preferred embodiment of the invention, the viscosity number VN₁ is in the range from 60 to 110 cm³/g, more preferably from 60 to 110 cm³/g.

The viscosity number VN₂ shall be used to indicate the viscosity number measured on the polymer after the second polymerization stage. The viscosity number VN₂ is therefore the viscosity number of the mixture of homopolymer A plus further homopolymer or first copolymer B. The viscosity number of the further homopolymer or of the first copolymer B formed in the second polymerization stage can be instead determined only mathematically.

According to a preferred embodiment of the invention, the viscosity number VN₂ is in the range from 270 to 400 cm³/g, preferably from 310 to 375 cm³/g.

The viscosity number VN₃ shall be used to indicate the viscosity number measured on the polymer after the third polymerization stage. The viscosity number VN₃ is therefore the viscosity number of the mixture of homopolymer A plus further homopolymer or first copolymer B plus second copolymer C. The viscosity number of the second copolymer C formed in the third polymerization stage can be instead determined only mathematically.

According to a preferred embodiment of the invention, the viscosity number VN₃ is in the range from 280 to 480 cm³/g, in particular from 330 to 440 cm³/g.

The PE molding composition of the invention may further comprise additional additives. Such additives may be, for example, heat stabilizers, anti-oxidants, UV stabilizers, light stabilizers, metal deactivators, peroxide-destroying compounds, basic co-stabilizers in amounts of from 0 to 10% by weight, preferably from 0 to 5% by weight, but also fillers, reinforcing materials, plasticizers, lubricants, emulsifiers, pigments, optical brighteners, flame retardants, antistatics, blowing agents or combinations of these in total amounts of from 0 to 50% by weight, based on the total weight of the composition.

The present invention also relates to a process for preparing a polyethylene molding composition as described above, comprising the step of polymerizing ethylene, said at least one first comonomer and said at least one second comonomer in suspension at a temperature preferably in the range from 20 to 120 °C, more preferably from 70 to 90 °C and, still more preferably, from 80 to 90°C, and at a pressure preferably in the range from 2 to 10 bar and, preferably, in the presence of a Ziegler catalyst.

The process for preparing the PE molding composition is preferably carried out in the presence of a catalytic system comprising a highly active Ziegler catalyst comprising a transition metal compound and a co-catalyst, preferably an organo-aluminum compound, by means of a multistage reaction sequence comprising at least three successive polymerizations.

Preferably, the polymerization is carried out in multiple successive polymerization stages comprising a first stage, a second stage, and a third stage performed in corresponding multiple reactors comprising a first reactor, a second reactor and a third reactor arranged in series.

The polymerization is preferably carried out in a cascaded suspension polymerization as described in EP-A-1 228 101.

The molar mass in each polymerization stage is preferably adjusted by means of a chain transfer agent, preferably hydrogen, and preferably in such a manner that the above-mentioned preferred values of viscosity numbers are obtained after each polymerization stage.

The PE molding composition of the invention is particularly suitable for the production of blown films by the blown film extrusion process. A possible way to carry out such process is detailed in the following.

The polyethylene molding composition is preferably firstly plasticized at temperatures in the range from 200 to 250°C in an extruder. Subsequently, the plasticized polyethylene is extruded in the molten state through an annular die so as to form a bubble having a substantially tubular form. The bubble is cooled, preferably by means of compressed air, and subsequently collapsed by means of rollers and rolled up into a film.

The molding composition of the invention can be processed particularly well by the film blowing process because this composition ensures an improved drawing capability and an adequate film bubble stability even under the typical processing conditions of large scale industrial plants. In other words, thanks to the drawing capability, particularly thin films having a regular and constant thickness may be produced. Thanks to the bubble stability, the film bubble coming out from the annular die remains stable even at high take-off speeds and shows no tendency to after its geometry neither in axial direction nor in radial direction. Preferably, the bubble has a frost line delimiting the molten material from the solidified material oscillating not more than ± 2 cm in axial direction during the shock test (performed as detailed in following Example 3) at a maximal take-off speed.

The invention further relates to a film comprising a PE molding composition as described above and having a thickness in the range from 8 to 200 µm, preferably from 10 to 100 µm. Preferably, the DDI of a film having a thickness of 20 µm id higher than 400 g.

### Detailed description of the preferred embodiments

The present invention will be further described by means of the following preferred embodiments without restricting the scope of the invention.

### Example 1: polymerization (invention)

Ethylene was polymerized in a continuous process performed in a cascaded mode in three reactors reciprocally arranged in series. A Ziegler catalyst prepared by the method of EP-A 401 776, Example 1, was used, having an extremely high responsiveness to hydrogen and an activity sufficient to carry out the cascaded polymerization, since this catalyst was able to maintain the activity over a long period, from 1 to 8 hours.

The catalyst had in particular the following analytical composition:

| | |
|---|---|
| Ti | 6.2% by weight |
| Mg | 70.8% by weight |
| Cl | 23.0% by weight. |

The catalyst was pre-activated by means of a sufficient amount of triethylaluminum and then fed into a first reactor in an amount of 4.7 mmol/h.

Sufficient suspension medium, in particular hexane, ethylene and hydrogen were additionally fed in the first reactor. The amount of ethylene (= 46 kg/h) and the amount of hydrogen (= 60 g/h) were set in such a manner that a percentage of 17% by volume of ethylene and a percentage of 65% by volume of hydrogen were measured in the gas space (gas temperature for the analytical measurement = 5±1 °C) of the first reactor. The remainder was a mixture of nitrogen and vaporized suspension medium.

The polymerization in the first reactor was carried out at a temperature of 84°C and under a pressure of 9.4 bar, corresponding to 0.94 MPa.

The suspension from the first reactor was then conveyed into a second reactor arranged in series with and downstream of the first reactor. The percentage of hydrogen in the gas space (gas temperature for the analytical measurement = 5 ± 1 °C) in the second reactor was reduced to 3.9% by volume by means of an intermediate H₂ depressurization. An amount of 30.7 kg/h of ethylene together with a very small amount of a first comonomer, namely 1-butene, were introduced into the second reactor. 59% by volume of ethylene, 3.9% by volume of hydrogen and 1.1% by volume of 1-butene were measured in the gas space of the second reactor; the remainder was a mixture of nitrogen and vaporized suspension medium.

The polymerization in the second reactor was carried out at a temperature of 84°C and under a pressure of 2.6 bar, corresponding to 0.26 MPa.

The suspension from the second reactor was conveyed via a further intermediate depressurization operated without off-gas into a third reactor arranged in series with and downstream of the second reactor. The hydrogen concentration was set to 7.5% by volume in the gas space by introducing hydrogen. Apart from 19.2 kg/h of ethylene, 1080 g/h of a second comonomer equal to the first comonomer introduced in the second stage, namely 1-butene were additionally introduced into the third reactor.

A percentage of ethylene of 63% by volume, a percentage of hydrogen of 7.5% by volume and a percentage of 1-butene of 5.2% by volume were measured in the gas space of the third reactor (gas temperature for the analytical measurement = 5±1 °C); the remainder was a mixture of nitrogen and vaporized suspension medium.

The polymerization in the third reactor was carried out at a temperature of 84°C and under a pressure of 3.1 bar, corresponding to 0.31 MPa.

The suspension medium was separated off from the polymer suspension leaving the third reactor and the powder was dried and passed to pelletization.

The polyethylene molding composition prepared as described above had viscosity numbers VN₁, VN₂ and VN₃, proportions w_{A}, w_{B} and w_{C} of the homopolymer A, of the first copolymer B and, respectively, of the second copolymer C and melt flow rates MFR₁, MFR₂ and MFR₃ which are reported in Table 1 below.

**Table 1**

| Example | 1 |
|---|---|
| w_{A} [% by weight] | 48 |
| w_{B} [% by weight] | 32 |
| w_{C} [% by weight] | 20 |
| VN₁ [cm³/g] | 80 |
| VN₂ [cm³/g] | 362 |
| VN₃ [cm³/g] | 395 |
| MFR_{1(190°C/1.2kg)} [g/10 min] | 70 |
| MFR_{2(190°C/5kg)}[g/10 min] | 0.70 |
| MFR_{3(190°C/5kg)} [g/10 min] | 0.40 |
| MFR_{pelletS(190°C/5kg)} [g/10 min] | 0.22 |

The abbreviations for the physical properties in Table 1 have the following meanings:
w_{A}, w_{B}, w_{C} = proportion of homopolymer A, first copolymer B and, respectively, second copolymer C in the total molding composition = reactor split, determined by the amount of ethylene fed into the respective reactor;
VN₁, VN₂, VN₃ = viscosity number of the polymer leaving the first, second and, respectively, third reactor measured in accordance with ISO/R 1191 in decalin at a temperature of 135°C;
MFR₁, MFR₂, MFR₃ = melt flow rate of the polymer leaving the first, second and, respectively, third reactor, measured in accordance with ISO 1133 with indication of the temperature and the load;
MFRₚₑₗₗₑₜₛ = melt flow rate of the final product after extrusion.

### Example 2: film preparation (invention)

From the molding composition so prepared, a film was produced in the following way.

A film having a thickness of 20 µm was produced on an Alpine film blowing plant comprising an extruder with a diameter d₁ of 50 mm and a length of 21 x d₁ (= 1.05 m) and an annular die having a diameter d₂ of 120 mm and a gap width of 1 mm. The film was produced at a blow-up ratio of 4:1 and a neck length of 7.5 x d₂ (= 90 cm). The melt temperature of the molding composition in the extruder was 205-210°C). The film properties are shown in Table 2 below.

### Example 3: film preparation (comparison)

A 20 µm film was produced using a commercial film raw material Hi-Zex, which is commercially available under the designation 7000 F from Mitsui, on the same plant and under the same conditions described in Example 2 with the exception that the melt temperature of the molding composition in the extruder was 215-220°C.

The film properties are shown in Table 2 below.

**Table 2**

| | Example 2 (invention) | Example 3 (comparison) |
|---|---|---|
| Take-off: 58 m/min | + | + |
| Shock test: | + | + |
| Take-off: 63 m/min | + | + |
| Shock test: | + | + |
| Take-off: 70 m/min | + | - |
| Shock test: | + | - |
| Take-off: 77 m/min | + | - |
| Shock test: | + | - |
| Take-off: 87 m/min | + | - |
| Shock test: | + | - |
| DDI [g] | 430 | 420 |
| Specks | No specks | high specks count |

More in particular, the film bubble stability was determined by the following procedure, including a preliminary test and a shock test as detailed below.

In the preliminary test, the take-off speed was set at predetermined increasing take-off speeds, namely ar 58, 63, 70, 77 and 87 m/min (= maximum rolling-up speed). After the respective take-off speed had been attained and the neck length had been adjusted to 90 cm by adjusting the cooling air blower, the axial oscillation of the film bubble was observed.

The test was considered finished and passed at a given speed if the axial oscillation of the bubble being formed was in the range of ± 2 cm over a period of observation of one (1) minute.

The shock test was subsequently carried out at the same take-off speed setting as in the preliminary test. In the shock test, the bubble was made axially oscillate. This was performed by fully opening the iris of the cooling air blower for a period of about 7 s. The iris was then reset to the initial position. The opening and closing of the iris was monitored via the pressure of the cooling air. At room temperature greater than 25°C, however, the opening of the above-mentioned iris alone is not sufficient to set the film bubble into oscillation. Accordingly, at temperatures greater than 25°C, the iris was firstly opened and then shut completely for a maximum of 3 s, after which it was reset to the initial position, always monitoring by means of the air pressure. The shock test was considered passed at a given take-off speed if the oscillations of the film bubble had abated to ± 2 cm within 2 minutes.

This was made for each one of the above-mentioned increasing take-off speeds. If the shock test or the preliminary test was not passed at a particular take-off speed, the stability grade corresponding to the previous lower take-off speed was awarded.

The dart drop impact strength of the films was determined according to the standard ASTM D 1709, method A.

The assessment of specks was carried out visually.

## Claims

1. A polyethylene molding composition for blown films having a thickness in the range from 8 to 200 µm, the composition having a multimodal molar mass distribution, a density at a temperature of 23°C in the range from 0.948 to 0.953 g/cm³ and a MFR_{190/5} of the final product after extrusion in the range from 0.10 to 0.50 dg/min, said polyethylene molding composition comprising:
- from 42 to 52% by weight of a first ethylene polymer fraction made of an ethylene homopolymer A having a first molecular weight,
- from 27 to 38% by weight of a second ethylene polymer fraction made of a further homopolymer or first copolymer B of ethylene and at least one first comonomer from the group of olefins having from 4 to 8 carbon atoms, said homopolymer or first copolymer B having a second molecular weight higher than said first molecular weight, and
- from 15 to 25% by weight of a third ethylene polymer fraction made of a second copolymer C of ethylene and at least one second comonomer, said second copolymer C containing from 3 to 15% by weight, based on the weight of the second copolymer C, of said at least one second comonomer and said second copolymer C having a third molecular weight higher than said second molecular weight,
all percentages being based on the total weight of the molding composition.

2. The polyethylene molding composition according to claim 1, comprising:
- from 42 to 52% by weight of the first ethylene polymer fraction,
- from 27 to 38% by weight of the second ethylene polymer fraction, the first copolymer B containing from 0.1 to 2.0% by weight, based on the weight of copolymer B, of said at least one first comonomer, and
- from 15 to 25% by weight of the third ethylene polymer fraction, the second copolymer C containing from 3 to 15% by weight, based on the weight of the second copolymer C, of said at least one second comonomer.

3. The polyethylene molding composition according to claim 1 or 2, wherein said first comonomer and said second comonomer are independently selected from the group comprising 1-butene, 1-pentene, 1-hexene, 1-octene, 4-methyl-1-pentene and mixtures thereof.

4. The polyethylene molding composition according to any one of claims 1 to 3, wherein the density is from 0.948 to 0.952 g/cm³ and the MFR_{190/5} of the final product after extrusion is in the range from 0.19 to 0.25 g/10 min.

5. The polyethylene molding composition according to claim 4, having a viscosity number VN₃, measured in accordance with ISO/R 1191 in decalin at a temperature of 135°C, in the range from 270 to 460 cm³/g.

6. A process for preparing a polyethylene molding composition according to anyone of claims 1 to 5, comprising the step of polymerizing ethylene, said at least one first comonomer and said at least one second comonomer in suspension at temperatures in the range from 20 to 120°C, at a pressure in the range from 2 to 10 bar and in the presence of a Ziegler catalyst comprising a transition metal compound and an organo-aluminum compound.

7. The process according to claim 6, wherein said polymerization step is carried out in multiple successive polymerization stages comprising a first stage, a second stage, and a third stage performed in corresponding multiple reactors comprising a first reactor, a second reactor and a third reactor arranged in series, the molar mass of the polyethylene composition prepared in each stage being adjusted in each case by means of hydrogen.

8. The process according to claim 7, wherein the hydrogen concentration in the first polymerization stage is set in such a manner that the homopolymer A has a viscosity number VN₁ in the range from 60 to 110 cm³/g.

9. The process according to claim 7 or 8, wherein the hydrogen concentration in the second polymerization stage is set in such a manner that the mixture of homopolymer A plus homopolymer or copolymer B has a viscosity number VN₂ in the range from 270 to 400 cm³/g.

10. The process according to any one of claims 7 to 9, wherein the hydrogen concentration in the third polymerization stage is set in such a manner that the mixture of homopolymer A plus first homopolymer or copolymer B plus second copolymer C has a viscosity number VN₃ in the range from 280 to 480 cm³/g.

11. Use of a polyethylene molding composition according to any one of claims 1 to 5 for producing blown films having a thickness in the range from 8 to 200 µm.

12. The use of a polyethylene molding composition according to claim 11, wherein the blown film is produced via a blown film process comprising the step of melting the polyethylene molding composition so as to obtain a polyethylene melt, extruding the polyethylene melt by forcing the same through an annular die so as to form a bubble having a frost line oscillating at a maximum of ± 2 cm in axial direction during the shock test at a maximal take-off speed.

13. A blown film comprising a polyethylene molding composition according to any one of claims 1 to 5, having a thickness in the range from 8 to 200 µm, and a DDI of more than 400 g, measured on a film having a thickness of 20 µm.

## Patentansprüche

1. Polyethylenformmasse für Blasfolien mit einer Dicke im Bereich von 8 bis 200 µm, wobei die Zusammensetzung eine multimodale Molmassenverteilung, eine Dichte bei einer Temperatur von 23°C im Bereich von 0,948 bis 0,953 g/cm³ und eine Schmelzflussrate (MFR_{190/5}) des Endprodukts nach Extrusion im Bereich von 0,10 bis 0,50 dg/min besitzt, wobei die Polyethylenformmasse Folgendes umfasst:
- von 42 bis 52 Gew.-% einer ersten Ethylenpolymerfraktion aus einem Ethylenhomopolymer A mit einem ersten Molekulargewicht,
- von 27 bis 38 Gew.-% einer zweiten Ethylenpolymerfraktion aus einem weiteren Homopolymer oder ersten Copolymer B von Ethylen und mindestens einem ersten Comonomer aus der Gruppe von Olefinen mit 4 bis 8 Kohlenstoffatomen, wobei das Homopolymer oder erste Copolymer B ein zweites Molekulargewicht hat, das höher ist als das erste Molekulargewicht, und
- von 15 bis 25 Gew.-% einer dritten Ethylenpolymerfraktion aus einem zweiten Copolymer C von Ethylen und mindestens einem zweiten Comonomer, wobei das zweite Copolymer C von 3 bis 15 Gew.-%, bezogen auf das Gewicht des zweiten Copolymers C, von dem mindestens einen zweiten Comonomer und dem zweiten Copolymer C enthält, mit einem dritten Molekulargewicht, das höher ist als das zweite Molekulargewicht,
wobei alle Prozentsätze auf das Gesamtgewicht der Formmasse bezogen sind.

2. Polyethylenformmasse nach Anspruch 1, die Folgendes umfasst:
- von 42 bis 52 Gew.-% der ersten Ethylenpolymerfraktion,
- von 27 bis 38 Gew.-% der zweiten Ethylenpolymerfraktion, wobei das erste Copolymer B von 0,1 bis 2,0 Gew.-%, bezogen auf das Gewicht von Copolymer B, des mindestens einen ersten Comonomers enthält, und
- von 15 bis 25 Gew.-% der dritten Ethylenpolymerfraktion, wobei das zweite Copolymer C von 3 bis 15 Gew.-%, bezogen auf das Gewicht des zweiten Copolymers C, des mindestens einen zweiten Comonomers enthält.

3. Polyethylenformmasse nach Anspruch 1 oder 2, wobei das erste Comonomer und das zweite Comonomer unabhängig voneinander aus der 1-Buten, 1-Penten, 1-Hexen, 1-Octen, 4-Methyl-l-penten und Mischungen davon umfassenden Gruppe ausgewählt sind.

4. Polyethylenformmasse nach einem der Ansprüche 1 bis 3, wobei die Dichte von 0,948 bis 0,952 g/cm³ beträgt und die Schmelzflussrate (MFR_{190/5}) des Endprodukts nach Extrusion im Bereich von 0,19 bis 0,25 g/10 min liegt.

5. Polyethylenformmasse nach Anspruch 4, mit einer Viskositätszahl VN₃, gemessen nach ISO/R 1191 in Decalin bei einer Temperatur von 135°C, im Bereich von 270 bis 460 cm³/g.

6. Verfahren zur Herstellung einer Polyethylenformmasse nach einem der Ansprüche 1 bis 5, mit dem Schritt des Polymerisierens von Ethylen, wobei das mindestens eine erste Comonomer und das mindestens eine zweite Comonomer, die bei Temperaturen im Bereich von 20 bis 120°C, bei einem Druck im Bereich von 2 bis 10 bar und in Gegenwart eines Ziegler-Katalysators in Suspension vorliegen, eine Übergangsmetallverbindung und eine aluminiumorganische Verbindung umfassen.

7. Verfahren nach Anspruch 6, wobei der Polymerisationsschritt in einer Vielzahl von aufeinanderfolgenden Polymerisationsstufen durchgeführt wird, die eine erste Stufe, eine zweite Stufe und eine dritte Stufe umfassen, die in einer entsprechenden Vielzahl von Reaktoren durchgeführt werden, die einen ersten Reaktor, einen zweiten Reaktor und einen dritten Reaktor umfassen, die hintereinandergeschaltet sind, wobei die Molmasse der in jeder Stufe hergestellten Polyethylenmasse in jedem Fall mittels Wasserstoff eingestellt wird.

8. Verfahren nach Anspruch 7, wobei die Wasserstoffkonzentration in der ersten Polymerisationsstufe so eingestellt wird, dass das Homopolymer A eine Viskositätszahl VN₁ im Bereich von 60 bis 110 cm³/g hat.

9. Verfahren nach Anspruch 7 oder 8, wobei die Wasserstoffkonzentration in der zweiten Polymerisationsstufe so eingestellt wird, dass die Mischung aus Homopolymer A plus Homopolymer oder Copolymer B eine Viskositätszahl VN₂ im Bereich von 270 bis 400 cm³/g hat.

10. Verfahren nach einem der Ansprüche 7 bis 9, wobei die Wasserstoffkonzentration in der dritten Polymerisationsstufe so eingestellt wird, dass die Mischung aus Homopolymer A plus erstem Homopolymer oder Copolymer B plus zweitem Copolymer C eine Viskositätszahl VN₃ im Bereich von 280 bis 480 cm³/g hat.

11. Verwendung einer Polyethylenformmasse nach einem der Ansprüche 1 bis 5 zur Herstellung von Blasfolien mit einer Dicke im Bereich von 8 bis 200 µm.

12. Verwendung einer Polyethylenformmasse nach Anspruch 11, wobei die Blasfolie über ein Blasfolienverfahren hergestellt wird, bei dem die Polyethylenformmasse zu einer Polyethylenschmelze geschmolzen wird, die Polyethylenschmelze extrudiert wird, indem diese durch eine Ringdüse gedrückt wird, um eine Blase zu bilden, die während der Stoßprüfung bei einer maximalen Abzugsgeschwindigkeit eine bei einem Maximum von ± 2 cm in axialer Richtung pendelnde Frostlinie hat.

13. Blasfolie aus einer Polyethylenformmasse nach einem der Ansprüche 1 bis 5, mit einer Dicke im Bereich von 8 bis 200 µm und einem DDI von mehr als 400 g, gemessen an einer Folie mit einer Dicke von 20 µm.

## Revendications

1. Composition de moulage de polyéthylène pour films soufflés présentant une épaisseur dans la plage de 8 à 200 µm, la composition présentant une distribution multimodale des masses molaires, une densité à une température de 23°C dans la plage de 0,948 à 0,953 g/cm³ et un MFR_{190/5} du produit final après extrusion dans la plage de 0,10 à 0,50 dg/min, ladite composition de moulage de polyéthylène comprenant :
- 42 à 52% en poids d'une première fraction de polymère d'éthylène constituée par un homopolymère A d'éthylène présentant un premier poids moléculaire,
- 27 à 38% en poids d'une deuxième fraction de polymère d'éthylène constituée par un autre homopolymère ou un premier copolymère B d'éthylène et d'au moins un premier comonomère du groupe des oléfines présentant 4 à 8 atomes de carbone, ledit homopolymère ou premier copolymère B présentant un deuxième poids moléculaire supérieur audit premier poids moléculaire, et
- 15 à 25% en poids d'une troisième fraction de polymère d'éthylène constituée par un deuxième copolymère C d'éthylène et d'au moins un deuxième comonomère, ledit deuxième copolymère C contenant 3 à 15% en poids, sur base du poids du deuxième copolymère C, dudit au moins un deuxième comonomère et ledit deuxième copolymère C présentant un troisième poids moléculaire supérieur audit deuxième poids moléculaire,
tous les pourcentages étant basés sur le poids total de la composition de moulage.

2. Composition de moulage de polyéthylène selon la revendication 1, comprenant :
- 42 à 52% en poids de la première fraction de polymère d'éthylène,
- 27 à 38% en poids de la deuxième fraction de polymère d'éthylène, le premier copolymère B contenant 0,1 à 2,0% en poids, sur base du poids du copolymère B, dudit au moins un premier comonomère, et
- 15 à 25% en poids de la troisième fraction de polymère d'éthylène, le deuxième copolymère C contenant 3 à 15% en poids, sur base du poids du deuxième copolymère C, dudit au moins un deuxième comonomère.

3. Composition de moulage de polyéthylène selon la revendication 1 ou 2, dans laquelle ledit premier comonomère et ledit deuxième comonomère sont choisis indépendamment dans le groupe comprenant le 1-butène, le 1-pentène, le 1-hexène, le 1-octène, le 4-méthyl-1-pentène et leurs mélanges.

4. Composition de moulage de polyéthylène selon l'une quelconque des revendications 1 à 3, dans laquelle la densité est de 0,948 à 0,952 g/cm³ et le MFR_{190/5} du produit final après extrusion est dans la plage de 0,19 à 0,25 g/10 min.

5. Composition de moulage de polyéthylène selon la revendication 4, présentant un indice de viscosité IV₃, mesuré conformément à la norme ISO/R 1191 dans de la décaline à une température de 135°C, dans la plage de 270 à 460 cm³/g.

6. Procédé pour préparer une composition de moulage de polyéthylène selon l'une quelconque des revendications 1 à 5, comprenant l'étape de polymérisation d'éthylène, dudit au moins un premier comonomère et dudit au moins un deuxième comonomère en suspension à des températures dans la plage de 20 à 120°C, à une pression dans la plage de 2 à 10 bars et en présence d'un catalyseur de Ziegler comprenant un composé d'un métal de transition et un composé organique de l'aluminium.

7. Procédé selon la revendication 6, dans lequel ladite étape de polymérisation est effectuée dans des étapes de polymérisation successives multiples comprenant une première étape, une deuxième étape et une troisième étape réalisées dans des réacteurs multiples correspondants comprenant un premier réacteur, un deuxième réacteur et un troisième réacteur disposés en série, la masse molaire de la composition de polyéthylène préparée dans chaque étape étant ajustée dans chaque cas au moyen d'hydrogène.

8. Procédé selon la revendication 7, dans lequel la concentration en hydrogène dans la première étape de polymérisation est réglée de manière telle que l'homopolymère A présente un indice de viscosité IV₁ dans la plage de 60 à 110 cm³/g.

9. Procédé selon la revendication 7 ou 8, dans lequel la concentration en hydrogène dans la deuxième étape de polymérisation est réglée de manière telle que le mélange de l'homopolymère A et de l'homopolymère ou du copolymère B présente un indice de viscosité IV₂ dans la plage de 270 à 400 cm³/g_{.}

10. Procédé selon l'une quelconque des revendications 7 à 9, dans lequel la concentration en hydrogène dans la troisième étape de polymérisation est réglée de manière telle que le mélange de l'homopolymère A et du premier homopolymère ou copolymère B et du deuxième copolymère C présente un indice de viscosité IV₃ dans la plage de 280 à 480 cm³/g.

11. Utilisation d'une composition de moulage de polyéthylène selon l'une quelconque des revendications 1 à 5 pour la production de films soufflés présentant une épaisseur dans la plage de 8 à 200 µm.

12. Utilisation d'une composition de moulage de polyéthylène selon la revendication 11, dans laquelle le film soufflé est produit via un procédé de film soufflé comprenant l'étape de fusion de la composition de moulage de polyéthylène de manière à obtenir une masse fondue de polyéthylène, l'extrusion de la masse fondue de polyéthylène en forçant celle-ci au travers d'une filière annulaire de manière à former une bulle présentant une ligne de cristallisation oscillant au maximum à ± 2 cm dans le sens axial pendant le test de choc à une vitesse maximale de prélèvement.

13. Film soufflé comprenant une composition de moulage de polyéthylène selon l'une quelconque des revendications 1 à 5, présentant une épaisseur dans la plage de 8 à 200 µm, et un DDI (dart drop impact - résistance au choc par la méthode par chute libre de projectile) supérieur à 400 g, mesuré sur un film présentant une épaisseur de 20 µm.
